# NOUVEAU FASCICULE DE BREVET EUROPEEN

(11) **EP 0 409 701 B2**
(45) Date de publication et mention de la décision concernant l'opposition: **29.07.1998**
(45) Mention de la délivrance du brevet: 21.09.1994
(21) Numéro de dépôt: 90402021.1
(22) Date de dépôt: 12.07.1990
(51) Int. Cl.: G07F 7/10

(54) **Carte à microcircuit câblé et procédé de transaction entre une carte à microcircuit câblé correspondante et un terminal**
Karte mit festverdrahteter Mikroschaltung und Verfahren zur Durchführung einer Transaktion zwischen einer solchen Karte und einem Endgerät
Hard-wired micro-circuit card and transaction method between a respective hard-wired micro-circuit card and a terminal

(30) Priorité: 19.07.1989 FR 8909734
(43) Date de publication de la demande: 23.01.1991
(73) Titulaire: FRANCE TELECOM, 75015 Paris (FR); LA POSTE, F-75700 Paris (FR)
(72) Inventeur: Pailles, Jean-Claude, F-14610 Epnon (FR); Girault, Marc, F-14000 Caen (FR)
(74) Mandataire: Plaçais, Jean-Yves

(56) Documents cités:
- EP-A- 321 728
- EP-A- 0 037 762
- EP-A- 0 193 920
- EP-A- 0 241 379
- EP-A- 0 250 309
- EP-A- 0 252 849
- DE-C- 224 937
- FR-A- 2 606 909
- "Cryptography and data security", Dorothy E. Denning, 1983, chapitre 1,page 1
- "Cryptography, a primer", Alan G. Konheim, 1981, page 7
- "Cryptography, a new dimension in computer data security", 1982, Carl H. Meyer et Stephen M. Matyas
- "Securité dans les reseaux informatiques", 1995 pages 40-43, traduction AFNOR de"Security for computer networks", 1989, D. W. DAVIES ET W. L. PRICE

## Description

L'invention concerne le domaine technique des cartes à microcircuit câblé, c'est-à-dire des cartes à mémoire sans microprocesseur.

L'invention concerne plus particulièrement la réalisation de transactions entre une carte à microcircuit câblé et un terminal telle que la réalisation de transactions monétaires, commerciales et financières.

Généralement les cartes à microcircuit câblé comprennent une interface de communication avec un terminal, une mémoire interne et une unité de traitement câblée très simple permettant d'adresser de l'extérieur la mémoire interne.

Compte tenu de leur faible coût, dû à l'absence de microprocesseur, les cartes à microcircuit câblé ont rapidement rencontré de nombreuses applications, notamment les cartes dites télécartes, du type pré-payé fonctionnant en France avec les appareils de téléphone public. Dans les cartes dites pré-payées, chaque bit de mémoire possède une valeur fixe à l'avance. Comme son nom l'indique, le possesseur d'une telle carte en paie la contre-valeur avant de s'en servir.

Aujourd'hui, les cartes de type pré-payé conviennent à des applications plus larges que ces télécartes, conduisant à faire d'une carte un porte-monnaie ou un portefeuille électronique (EP-A-0 241 379).

L'un des problèmes que l'on rencontre alors est de sécuriser la carte à microcircuit câblé, sachant qu'il est facile de frauder les bits de mémoire auxquels est affectée une certaine valeur.

Une solution à ce problème, consiste à équiper la carte de moyens d'authentification de la carte ainsi que de son contenu. Or, une mise en oeuvre conventionnelle de tels moyens nécessite le recours à des techniques coûteuses telles que la logique programmée à base de microprocesseurs qui freinent la large diffusion de telles cartes en augmentant leur prix unitaire (EP-A-0 250 309). On connaît aussi par EP-A-0 321 728 une carte munie de moyens d'authentification à logique câblée, et par DE-C-2 224 937 un support de données ayant un calculateur de chiffrement avec une mémoire secrète, et travaillant sur la base de plusieurs entrées.

L'invention vient apporter une solution à ce problème.

L'invention vise à sécuriser de manière simple et peu coûteuse une carte à microcircuit câblé contre la copie frauduleuse et à sécuriser des transactions entre une carte à microcircuit câblé et un terminal.

Ainsi, un but de l'invention est d'équiper une carte à microcircuit câblé de moyens électroniques câblés de mise en oeuvre simple et peu coûteuse permettant d'empêcher la copie frauduleuse de la carte ainsi que d'authentifier le contenu de ladite carte (c'est à dire, empêcher la fabrication frauduleuse de fausses cartes).

Un autre but de l'invention est de sécuriser les transactions entre une carte à microcircuit câblé et un terminal, principalement lors de l'authentification ou l'habilitation de la carte avant transaction et lors de la mise à jour du contenu de la carte après transaction.

L'invention concerne donc une carte à microcircuit câblé du type comprenant :
- une interface de communication :
- une mémoire interne; et
- une unité de traitement câblée permettant d'adresser de l'extérieur cette mémoire interne.

Selon une définition générale de l'invention, il est prévu une zone mémoire interne secrètes, non adressable de l'extérieur tandis que l'unité de traitement comprend un circuit câblé ayant une boucle à retard entre les sorties et les entrées d'adresses de la mémoire secrète, et propre à utiliser le contenu de la mémoire secrète pour établir une première fonction cryptographique série de deux opérandes et des moyens réagissant à l'interrogation d'adresses prédéterminées de la mémoire, accompagnée d'un mot clé, en appliquant ce mot clé et la sortie de la mémoire interne comme opérandes du circuit câblé,tandis que la sortie du circuit câblé est appliquée à l'interface.

Selon un autre aspect de l'invention, le circuit câblé comprend :
- un premier opérateur logique recevant le mot clé et la sortie de la mémoire interne;
- un circuit logique à retard possédant des moyens à retard formant ladite boucle entre les sorties et les entrées d'adresses de la mémoire secrète avec intervention de moyens d'entrée recevant la sortie du premier opérateur ainsi que les sorties des moyens à retard, tandis que le circuit logique à retard comprend en outre des moyens de sortie recevant les sorties des moyens à retard et dont la sortie fournit la sortie du circuit câblé.

En pratique, les moyens d'entrée comprennent :
- un second opérateur logique recevant d'une part la sortie du premier opérateur, d'autre part une sortie des moyens à retard, au moins ce second opérateur étant du type binaire équiprobable, tel qu'un OU EXCLUSIF.

En pratique, les moyens à retard comprennent une pluralité de bascules montées en boucle entre les sorties et les entrées d'adresses de la mémoire secrète, l'une au moins des bascules recevant la sortie du second opérateur logique, lui-même recevant d'une part la sortie du premier opérateur, d'autre part une sortie de la mémoire secrète; tandis qu'une des bascules fournit la sortie du circuit câblé.

Avantageusement, les deux opérateurs logiques sont du type OU EXCLUSIF.

Selon un mode de réalisation préféré de l'invention, le mot clé est une donnée variable provenant de l'interface.

Selon un autre aspect de l'invention, la mémoire interne comprend :
- des bits d'identification de la carte;
- des bits de valeur auxquels est affectée une unité de valeur, consommable par écriture; et
- des bits de signature de la carte.

Selon une caractéristique importante de l'invention, les bits de signature de la carte sont le résultat d'un chiffrement par une seconde fonction cryptographique, secrète, extérieure à la carte, et ayant la sortie de la mémoire interne comme opérande.

En pratique, les bits d'identification et les bits de valeur sont les opérandes de la seconde fonction cryptographique.

Selon un mode de réalisation de l'invention, la mémoire interne est à écriture permanente, non effaçable électriquement, du type EPROM.

Selon un autre mode de réalisation de l'invention, la mémoire interne est à écriture permanente, effaçable et renouvelable électriquement, du type EEPROM.

Avantageusement, la zone mémoire secrète est une mémoire à écriture permanente,par exemple, du type PROM, possédant un contenu binaire fixe.

L'invention porte également sur un procédé de transaction entre au moins un terminal et au moins une carte à microcircuit câblé propre à coopérer avec ce terminal.

Il est connu du document EP-A-0 241 379 un procédé de transaction entre au moins un terminal et au moins une carte à microcircuit câblé propre à coopérer avec ce terminal selon le préambule de la revendication 14.

Selon une définition générale du procédé selon l'invention, le procédé est caractérisé par les étapes suivantes :
- a) prévoir dans la carte une zone mémoire interne secrète, non adressable de l'extérieur;
- b) mémoriser préalablement dans la carte :
   . des bits de signature de la carte;
- c) équiper l'unité de traitement de la carte d'un circuit câblé ayant une boucle à retard entre les sorties et les entrées d'adresses de la mémoire secrète, et propre à utiliser le contenu de la mémoire secrète pour établir une première fonction cryptographique série de deux opérandes;
- d) lors d'une demande d'habilitation pour une transaction qui est supposée provenir de la carte,
   . d1) recevoir au terminal la sortie de la mémoire interne;
   . d2) équiper le terminal de moyens propres à générer un mot clé;
   . d3) émettre du terminal le mot clé;
   . d4) calculer, au niveau de la carte, le transformé du mot clé et de la sortie de la mémoire interne par la première fonction cryptographique;
   . d5) recevoir de la carte, ledit transformé par la première fonction cryptographique;
   . d6) calculer au terminal, le transformé du mot clé et de la sortie de la mémoire interne par la première fonction cryptographique;
   . d7) décider de l'habilitation en fonction de la comparaison entre le transformé reçu de la carte et le transformé calculé par le terminal.

En pratique, au niveau de la carte, les bits de signature servent avec le mot clé d'opérandes à la première fonction cryptographique.

Avantageusement, les bits de signature sont le transformé d'une seconde fonction cryptographique secrète, extérieure à la carte, et ayant la sortie de la mémoire interne comme opérande, par exemple les bits d'identification et les bits de valeur.

Selon un mode de mise en oeuvre préféré du procédé selon l'invention, ledit procédé comprend en outre l'équipement du terminal de moyens propres effectuer une seconde fonction cryptographique ayant la sortie de la mémoire interne comme opérande, par exemple les bits d'identification et les bits de valeur tandis que lors d'une demande d'habilitation pour une transaction, l'étape d1) comprend en outre l'étape suivante :
. calculer au terminal le transformé de la sortie de la mémoire interne, par exemple les bits d'identification et les bits de valeur, par la seconde fonction cryptographique pour obtenir les bits de signature; alors que l'étape d6) consiste à calculer au terminal le transformé de la première fonction cryptographique ayant pour opérandes le mot clé ainsi que le transformé de la seconde fonction cryptographique, c'est-à-dire les bits de signature.

L'homme de l'art comprendra que la sécurisation du procédé de transaction entre un terminal et une carte selon l'invention est obtenue grâce notamment à la seconde fonction cryptographique qui est spécifique au terminal et qui permet de signer la carte sans l'échange en dair entre le terminal et la carte des bits de signature de la carte.

Selon un autre mode de mise en oeuvre préféré du procédé selon l'invention, dans lequel la carte à microcircuit câblé détient au moins des bits de valeur possédant une valeur fixée à l'avance destinés à être traités par le terminal pour valider la transaction selon des critères choisis, ledit procédé comprend les étapes suivantes après la condusion de la transaction :
- a) obtenir au terminal les bits de valeur après transaction;
- b) comparer au terminal les bits de valeur après transaction avec les bits de valeur avant transaction;
- c) calculer au terminal, si les bits de valeur après transaction sont supérieurs aux bits de valeur avant transaction, le transformé des bits d'identification et des bits de valeur après transaction par la seconde fonction cryptographique;
- d) décaler selon une permutation circulaire d'un élément binaire, le transformé ainsi calculé, par la seconde fonction cryptographique;
- e) obtenir un signal intermédiaire chiffré par la somme OU EXCLUSIVE du transformé par la seconde fonction cryptographique calculé avant transaction et du transformé par la seconde fonction cryptographique calculé après transaction, lui-même décalé selon la permutation circulaire;
- f) émettre du terminal les bits d'identification et les bits de valeur après transaction;
- g) émettre du terminal le signal intermédiaire chiffré;
- h) écrire dans la mémoire les bits d'identification et les bits de valeur après transaction;
- i) mémoriser dans la carte la somme OU EXCLUSIVE des bits de signature avant transaction et du signal intermédiaire chiffré;
- j) écrire dans la mémoire les bits de signature après transaction à l'aide de ladite somme OU EXCLUSIVE ainsi mémorisée.

Une première variante du procédé selon l'invention dans lequel la mémoire est gérée comme un boulier, prévoit de calculer le transformé par la première fonction cryptographique avec comme première opérande le mot clé et avec comme seconde opérande en série les bits de valeur ainsi que les bits de signature.

Cette variante prévoit aussi un mode de rechargement de la carte en cas d'épuisement des bits de valeur, cette variante du procédé comprenant les étapes suivantes :
- a) mettre à zéro les bits d'identification, les bits de valeur, et les bits de signature avant rechargement
- b) incrémenter un compteur de rechargement; et
- c) recharger dans la carte les nouveaux bits d'identification, de valeur et de signature.

Une seconde variante du procédé selon l'invention dans lequel la mémoire est gérée selon un compteur binaire, prévoit un mode de mise à jour des bits de valeur après transaction, comprenant les étapes suivantes :
- a) émettre du terminal, les bits représentatifs du montant de la transaction ;
- b) comparer les bits représentatifs du montant avec les bits de valeur;
- c) soustraire les bits représentatifs du montant des bits de valeur;
- d) positionner un indicateur selon le signe de la soustraction.

D'autres caractéristiques et avantages de l'invention apparaîtront à l'examen de la description détaillée ci-après, et des dessins annexés, sur lesquels :
- la figure 1 illustre un mode de réalisation d'un système de transaction permettant la mise en oeuvre de l'invention;
- la figure 2 est un schéma illustrant la structure d'une carte à microcircuit câblé selon l'invention;
- la figure 3 est un schéma général du circuit câblé selon l'invention;
- la figure 4 est un schéma détaillé d'un exemple de mise en oeuvre du circuit câblé permettant d'établir la première fonction cryptographique selon l'invention;
- la figure 5 est un schéma détaillé d'un autre exemple de mise en oeuvre du circuit câblé permettant d'établir la première fonction cryptographique selon l'invention;
- les figures 6 à 6d illustrent les étapes relatives à l'habilitation d'une carte dotée d'une mémoire EEPROM avant transaction tandis que les figures 7 à 7d illustrent les étapes relatives à la mise à jour d'une telle carte après transaction;
- les figures 8a à 8d illustrent les étapes relatives à l'habilitation d'une carte dotée d'une mémoire EPROM avant transaction;
- la figure 9 illustre l'étape relative à la consommation des bits de valeur d'une mémoire EPROM;
- les figures 10a à 10d illustrent les étapes relatives au rechargement de la mémoire d'une carte EPROM.
- la figure 11 est un schéma détaillé d'un mécanisme de décomptage de bits de valeur selon l'invention tandis que la figure 12 illustre l'étape relative audit décomptage.

Les dessins annexés sont pour l'essentiel de caractère certain. Ils font donc partie intégrante de la description et pourront non seulement servir à mieux faire comprendre celle-ci, mais aussi, le cas échéant, contribuer à la définition de l'invention.

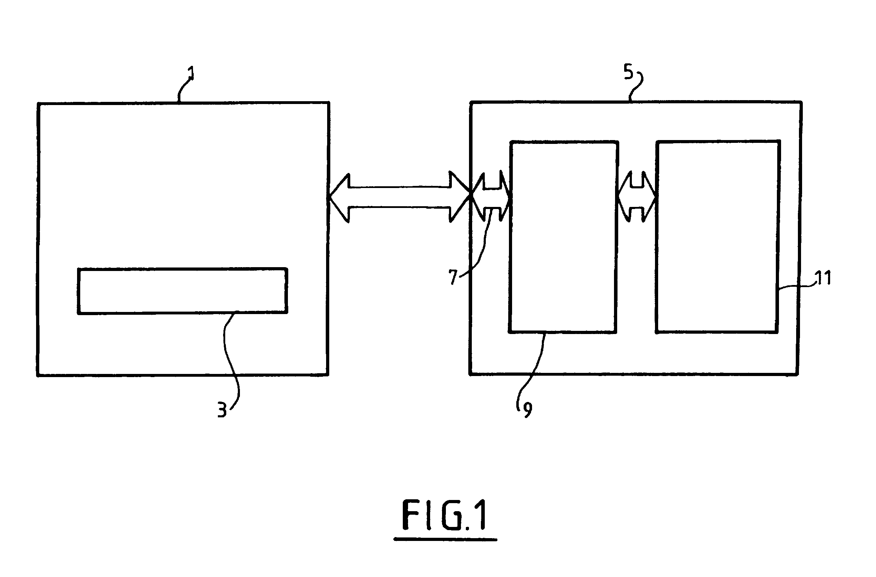

Sur la figure 1, un terminal 1 muni de moyens de traitement 3 est en interaction avec une carte à microcircuit câblé 5 possédant une interface de communication 7, une mémoire interne 11, et une unité de traitement câblée 9 permettant d'adresser de l'extérieur cette mémoire interne.

La mémoire interne Il est par exemple à écriture permanente, non effaçable électriquement du type EPROM. En variante, elle peut être à écriture permanente, effaçable et renouvelable électriquement, c'est-à-dire du type EEPROM noté parfois e²PROM.

Il s'agit-là des principaux types de cartes actuellement disponibles sur le marché.

Les mémoires utilisables selon l'invention sont les mémoires mortes électriquement programmables, dans lesquelles cette opération de programmation commandée électriquement correspond à l'écriture permanente définie ci-dessus. Dans une carte pré-Payée, un bit non écrit se voit affecter une unité de valeur, qui va être consommée par l'écriture de ce bit.

La reprogrammation de la carte suppose que l'on soit en mesure de réaliser son effacement Seules les mémoires e²PROM sont effaçables électriquement. De leur côté, les mémoires de technologie EPROM ne seraient effaçables que par d'autres moyens, tels qu'un rayonnement ultraviolet.

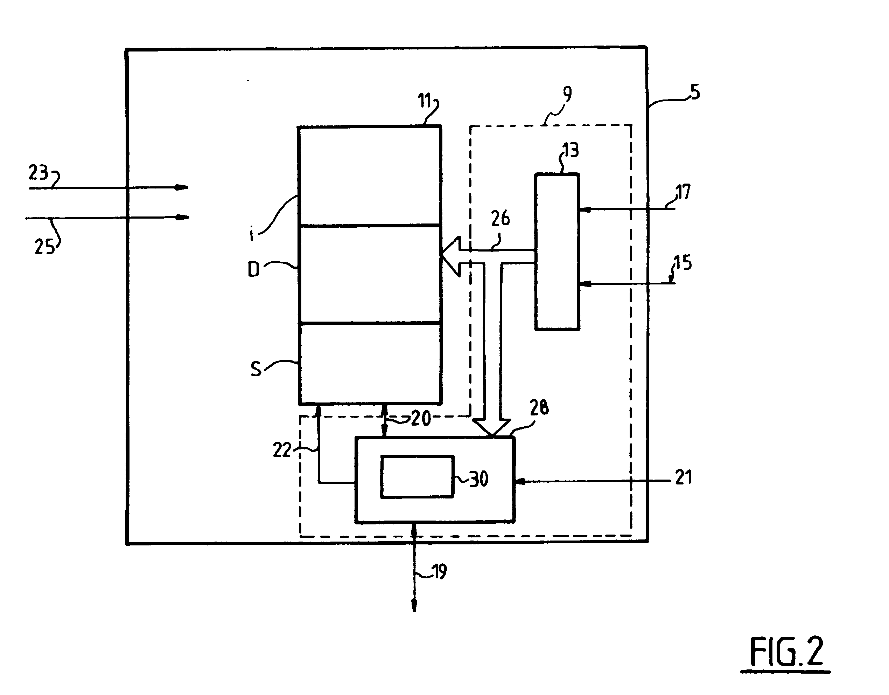

Sur la figure 2, on a représenté schématiquement la structure d'une carte à microcircuit câblé selon l'invention. La mémoire interne Il contient par exemple 256 bits, adressés par un compteur d'adresses 13 via un bus d'adresses 26.Le compteur 13 est de 8 bits, et il est remis à 0 par un signal de remise à zéro 15. Le bus d'adresses 26 est appliqué à une unité de commande 28 qui assure des fonctions de commande et d'aiguillage de la mémoire 11. La mémoire 11 est une mémoire série, lue ou écrite au rythme d'un signal horloge 17 sur le fil entrée-sortie 19 de l'unité de commande 28. Le signal lecture/écriture 21 de l'unité de commande 28 permet de choisir le mode lecture ou écriture. Le signal horloge 17 provient du terminal 1. La carte 5 est alimentée par un signal d'alimentation 23 tandis qu'elle est mise à la masse par la ligne 25. Une ligne entrée/sortie 20 relie la mémoire interne 11 à l'unité de commande 28 qui possède selon l'invention un circuit câblé 30 que l'on décrira plus en détail ci-après tandis qu'une ligne de commande 22 provenant de l'unité de commande 28 est connectée à la mémoire 11.

La mémoire 11 comprend des bits d'identification de la carte i, des bits de valeur D auxquels est affectée une unité de valeur, consommable par écriture, et des bits de signature S de la carte.

Par exemple, les bits d'identification i sont stockés sur 64 bits en des adresses allant de A0 jusqu'à A63, les bits de valeur D sont stockés sur 128 bits en des adresses allant de A64 jusqu'à A191, tandis que les bits de signature S sont stockés sur 64 bits en des adresses allant de A192 jusqu'à A255.

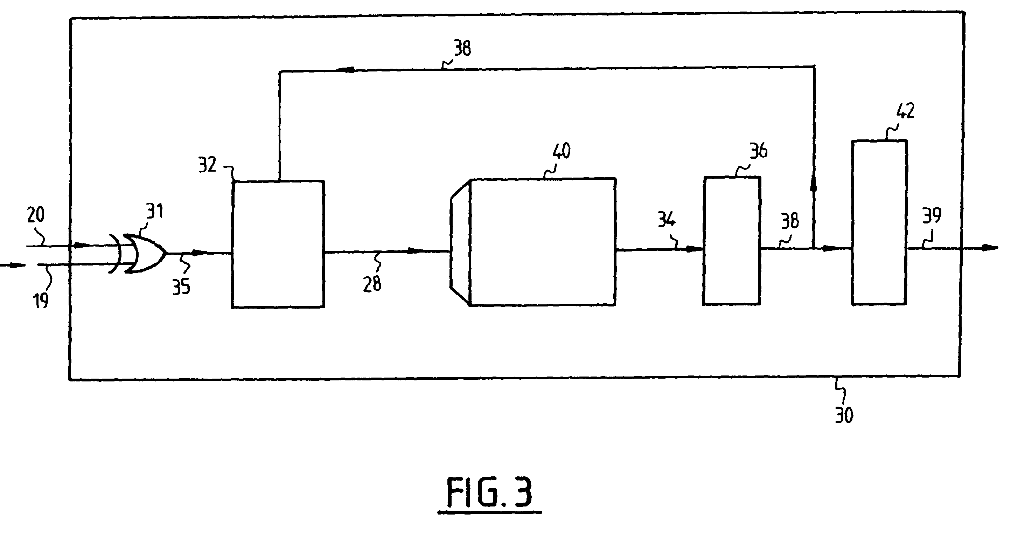

Sur la figure 3, on a representé le circuit câblé 30 qui est un élément essentiel de l'invention. Il comprend un premier opérateur logique 31 du type OU EXCLUSIF recevant deux opérandes provenant respectivement de la ligne entrée/sortie 19 de la carte et de la ligne entrée/sortie 20.

Le circuit câblé 30 possède une mémoire interne secrète 40 non adressable de l'extérieur. Par exemple, la mémoire 40 est du type PROM ayant 4 éléments binaires d'adresses et 16 mots de 4 éléments binaires, c'est-à-dire une capacité de 64 éléments binaires.

Le circuit câblé 30 comprend enfin un circuit logique à retard possédant des moyens à retard 36 et formant boude entre les sorties 34 et les entrées 28 d'adresses sur 4 bits de la mémoire secrète 40, avec intervention de moyens d'entrée 32 recevant d'une part la sortie 35 du premier opérateur 31, d'autre part les sorties 38 des moyens à retard 36.Les sorties 38 des moyens à retard 36 sont également appliquées à un opérateur logique de sortie 42. La sortie 39 de l'opérateur logique 42 fournit la sortie du circuit câblé 30 qui est elle-même reliée à la ligne entrée-sortie 19 de la carte .

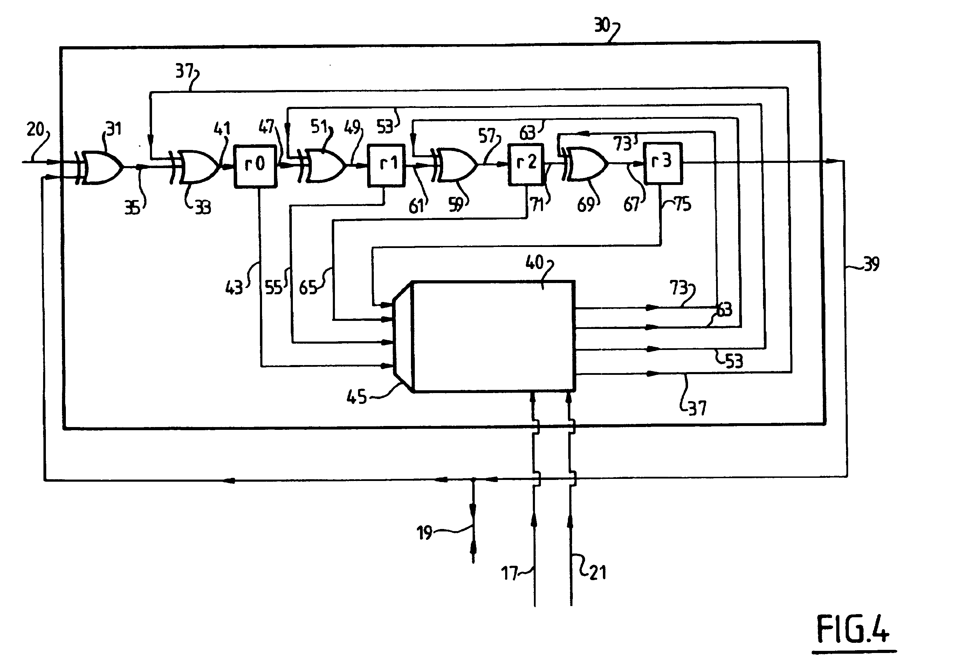

Sur la figure 4, on a représenté un mode de réalisation des moyens à retard 36 décrits en référence à la figure 3. Les moyens d'entrée sont constitués d'un second opérateur logique du type OU EXCLUSIF 33 recevant d'une part la sortie 35 du premier opérateur 31, d'autre part une sortie 37 de la mémoire secrète 40.

Les moyens à retard 36 sont constitués d'une pluralité de bascules R. Dans la mesure où la mémoire secrète 40 est à 4 éléments binaires d'adresses, les moyens à retard 36 possèdent 4 bascules individualisées en R0 à R3, montées en boude entre les sorties et les entrées d'adresses de la mémoire secrète 40. Plus précisément, la bascule R0 reçoit la sortie 41 du second opérateur logique 33. L'une des sorties 43 de la bascule R0 est reliée au décodeur d'adresses 45 de la mémoire secrète 40.

La bascule R1 reçoit la sortie 49 d'un troisième opérateur logique du type OU EXCLUSIF 51 recevant d'une part l'autre sortie 47 de la bascule R0 d'une part et la sortie 53 de la mémoire secrète 40 d'autre part. L'une des sorties 55 de la bascule R1 est reliée au décodeur d'adresses 45 de la mémoire secrète 40.

La bascule R2 reçoit la sortie 57 d'un quatrième opérateur logique du type OU EXCLUSIF 59 recevant l'autre sortie de la bascule R1 d'une part et une sortie 63 de la mémoire secrète 40 d'autre part. L'une des sorties 65 de la bascule R2 est reliée au décodeur d'adresses 45 de la mémoire secrète 40.

La bascule R3 reçoit la sortie 67 d'un cinquième opérateur logique de type OU EXCLUSIF 69 recevant l'autre sortie de la bascule R2 d'une part, et la sortie 73 de la mémoire secrète 40 d'autre part. L'une des sorties 75 de la bascule R3 est reliée au décodeur d'adresses 45 de la mémoire secrète 40.

L'autre sortie 39 de la bascule R3 qui joue le rôle de moyens de sortie 42 est reliée à la ligne entrée/sortie 19 de la carte 5 qui est elle-même reliée à l'interface de communication i de la carte.

Par exemple, les bascules R0 à R3 sont de type bascule D.

Bien entendu, il s'agit ici d'un exemple de mise en oeuvre du circuit câblé qui convient à une mémoire secrète adressable sur 4 bits. Il est évident que le nombre de bascules R pourrait être différent pour une mémoire secrète adressable sur un nombre d'éléments binaires différent.

Avantageusement, les opérateurs logiques sont de type binaire équiprobable, tel qu'un OU EXCLUSIF.

Le circuit câblé 30 utilise le contenu de la mémoire secrète 40 pour établir une fonction cryptographique f série de deux opérandes dont la première est un mot clé 19 et dont la seconde est la sortie de la mémoire interne 11.

Avantageusement, le mot clé est une donnée variable ( nombre aléatoire choisi par le terminal 1) provenant du terminal 1 véhiculé via l'interface de communication par la ligne entrée/sortie 19 de la carte 5.

Grâce à l'invention, l'observation de plusieurs couples mots clés-transformés par la fonction cryptographique f, ne permet pas de découvrir les secrets de la carte avec les moyens actuels, connus de l'homme de l'art.

La seconde opérande de l'opérateur logique 31 comprend les bits de signature S provenant de la mémoire interne Il via la ligne 20.

Ces bits de signature S sont mémorisés préalablement dans la mémoire Il et proviennent d'un chiffrement selon une autre fonction cryptographique H, secrète, extérieure à la carte, et ayant la sortie de la mémoire interne comme opérande.

Par exemple, les bits de signature S sont le transformé par la seconde fonction cryptographique H des bits d'identification i et des bits de valeur D.

Pour éviter la fraude sur les bits de signature S, seuls les bits d'identification i et les bits de valeur D sont échangés vers l'extérieur tandis que les bits de signature S sont transmis uniquement entre la mémoire interne Il et le circuit câblé 30, ce qui permet de sécuriser la carte. En effet, la connaissance de i, D et S permettrait de fabriquer frauduleusement de fausses cartes.

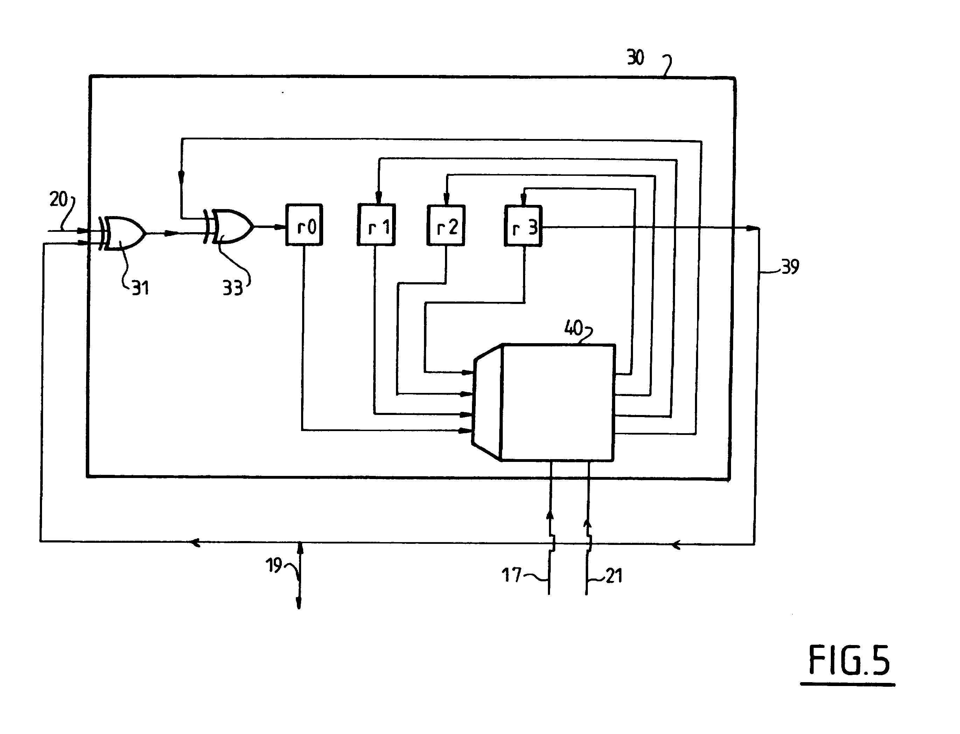

La figure 5 fait apparaître un schéma détaillé d'un autre exemple de mise en oeuvre du circuit câblé selon l'invention.

On retrouve ici les 4 bascules R0 à R3 formant boude entre les sorties et les entrées d'adresses de la mémoire secrète 40, ainsi que les 2 opérateurs logiques 31 et 33. Par contre, les opérateurs logiques 51, 59 et 69 sont ici supprimés pour simplifier les interconnexions entre les bascules R0 à R3.

La carte à microcircuit câblé selon l'invention est généralement destinée à entrer en coopération avec un terminal en vue de condure une transaction de type monétaire, financière ou commerciale. Pour sécuriser cette transaction, l'invention offre un procédé d'habilitation informatique ou télématique entre au moins un terminal et au moins une carte à microcircuit telle que décrite en référence aux figures 1 à 5 et qui est propre à coopérer avec ce terminal.

Ce procédé d'habilitation informatique comporte les étapes suivantes :
- a) équiper la carte 5 d'une interface de communication 7, d'une mémoire interne Il, d'une unité de traitement câblée 9 permettant d'adresser de l'extérieur cette mémoire interne Il,
- b) prévoir dans la carte, une zone mémoire interne secrète 40, non adressable de l'extérieur,
- c) mémoriser préalablement dans la carte 5, des bits d'identification de la carte i, des bits de valeur D auxquels est affectée une unité de valeur consommable par écriture; et des bits de signature S de la carte;
- d) équiper l'unité de traitement de la carte 9 d'un circuit câblé 30 propre à utiliser le contenu de la mémoire secrète 40 pour établir une première fonction cryptographique f série de 2 opérandes;
- e) lors d'une demande d'habilitation pour une transaction qui est supposée provenir de la carte:
   . e1) recevoir au terminal la sortie de la mémoire interne;
   . e2) équiper le terminal de moyens propres à générer un mot clé;
   . e3) émettre du terminal le mot clé;
   . e4) calculer au niveau de la carte le transformé du mot dé et de la sortie de la mémoire interne par la première fonction cryptographique f;
   . e5) recevoir de la carte ledit transformé par la première fonction cryptographique f;
   . e6) calculer au terminal, le transformé du mot clé et de la sortie de la mémoire interne par la première fonction cryptographique f;
   . e7) décider de l'habilitation en fonction de la comparaison entre le transformé reçu de la carte et le transformé calculé par le terminal.

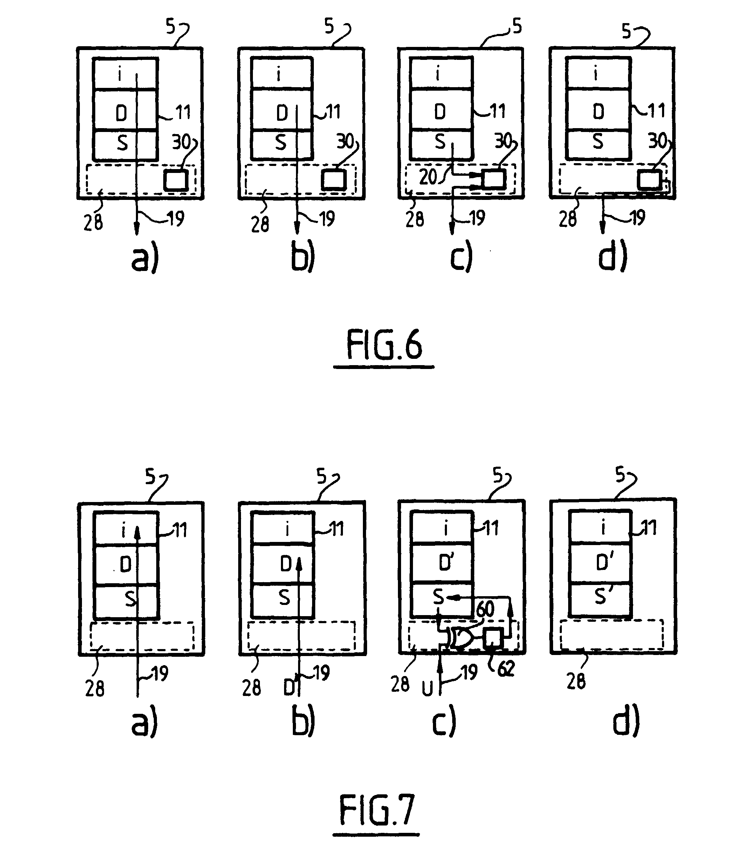

On fait maintenant référence à la figure 6 qui illustre les étapes e1), e4), e6) du procédé selon l'invention.

Plus précisément, sur la partie a de la figure 6, on a représenté la configuration de la carte pour l'étape e1) relative à l'émission des bits d'identification de la carte vers le terminal. Il s'agit d'une lecture des cases mémoire relatives aux bits d'identification i. Par exemple, il s'agit ici de la lecture des cases mémoire d'adresses A0 à A63.

Sur la partie b de la figure 6, on a représenté la configuration de la carte 5 selon l'invention dans le cadre de l'étape relative à l'émission des bits de valeur D au terminal via la ligne entrée/sortie 19 de la carte. Il s'agit de la lecture des cases mémoire relatives aux bits de valeur D stockés en des adresses A64 à A191.

Sur la partie c de la figure 6, on a représenté la configuration de la carte 5 pour l'étape relative au calcul du transformé du mot clé et de la sortie de la mémoire interne par la fonction cryptographique f établie par le circuit câblé 30. Il s'agit ici de la lecture des bits de signature S contenus dans la mémoire aux adresses A192 à A255 d'une part, et de la réception du mot clé provenant du terminal via la ligne entrée/sortie 19 de la carte 5.

Sur la partie d de la figure 6, on a représenté la configuration de la carte 5 lors de l'étape relative à l'émission du transformé par la fonction cryptographique f vers le terminal via la ligne entrée/sortie 19. Il s'agit ici de la lecture du transformé par la première fonction cryptographique. Cette lecture s'effectue aux adresses A256 à A259.

Le transformé du mot clé et de la sortie de la mémoire interne par la fonction cryptographique f du circuit câblé 30, est reçu par le terminal. Par exemple le mot dé est une donnée variable générée par le terminal d'une longueur de 64 bits tandis que la sortie de la mémoire interne est constituée des bits de signature S s'étendant également sur 64 bits.

Les moyens de traitement et de calcul 3 du terminal 1 calculent d'abord le transformé par la fonction cryptographique f des bits de signature S de la carte et du mot clé. Les bits de signature S sont préalablement établis par la fonction cryptographique H à l'aide des bits d'identification i et des bits de valeur D préalablement reçus par le terminal 1. Il faut observer que les bits de signature S ne sont jamais transmis via les moyens d'interface entre la carte et le terminal. Dans le cas contraire, il serait facile à un fraudeur de fabriquer frauduleusement une fausse carte.

Puis, les moyens 3 comparent le transformé ainsi calculé par la fonction cryptographique f au niveau du terminal avec le transformé reçu de la carte.

En cas d'identité des deux transformés, les moyens de calcul et de traitement 3 concluent à l'authenticité de la carte et décident son habilitation pour une transaction entre ladite carte et le terminal.

En fin de transaction, il y a lieu de mettre à jour les bits de valeur D et les bits de signature S. Il n'est pas possible que le terminal envoit en dair les nouvelles valeurs D'et S' des bits de valeur D et des bits de signature S après transaction car, dans ce cas, un utilisateur pourrait créer frauduleusement une copie de la carte en captant D' et S'.

L'invention prévoit pour pallier cet inconvénient, de chiffrer la nouvelle valeur des bits de signature S' de telle sorte que son déchiffrement au niveau de la carte soit simple à réaliser en logique câblée.

Selon l'invention, la méthode de chiffrement U des bits de signature S après transaction est effectuée par les moyens de traitement et de calcul du terminal 3. Plus précisément, ces moyens de traitement et de calcul 3 déterminent tout d'abord la nouvelle valeur des bits de valeur D' après transaction en fonction de critères choisis selon la transaction établie. Puis ces moyens de traitement et de calcul déterminent la nouvelle valeur des bits de signature S' à l'aide de la seconde fonction cryptographique H qui a maintenant pour opérandes i et D'. Enfin ces moyens de traitement et de calcul 3 chiffrent cette nouvelle valeur des bits de signature S' de telle sorte qu'un fraudeur ne puisse utiliser cette valeur pour créer une fausse carte.

Selon une caractéristique importante de l'invention, le chiffrement U des bits de signature S' consiste à effectuer la somme OU EXCLUSIVE de l'ancienne valeur des bits de signature S d'une part et de la nouvelle valeur des bits de signature S' modifiée selon une permutation circulaire d'un élément binaire d'autre part.

La permutation circulaire d'un élément binaire peut être effectuée à droite ou à gauche.

L'homme de l'art comprendra que cette permutation circulaire qui n'est pas commutative vis-à-vis de l'opérateur OU EXCLUSIF, empêche à un fraudeur de déduire de la somme OU EXCLUSIVE, la nouvelle valeur des bits de signature S'.

On se réfère maintenant à la figure 7 qui illustre la méthode de chiffrement des bits de signature décrite ci-avant.

Sur la partie a de la figure 7, les bits d'identification i sont écrits dans la mémoire interne Il aux adresses A0 à A63.

Sur la partie b de la figure 7, les bits de valeur D' sont écrits dans la mémoire interne Il aux adresses A64 à A191.

Sur la partie c de la figure 7, les bits de signature S avant transaction sont additionnés à l'aide d'un opérateur logique OU EXCLUSIF 60 logé dans l'unité de commande 28, aux bits de signature chiffrés U résultant de la somme OU EXCLUSIVE des bits de signature S avant transaction d'une part et des bits de signature S'après transaction modifiés selon une rotation circulaire d'un élément binaire d'autre part

Un registre 62 permet de gérer cette opération de rotation circulaire. Cette opération nécessite :
- a) la lecture des bits de signature S avant transaction;
- b) la somme OU EXCLUSIVE des bits de signature S avant transaction et des bits de signature chiffrés U provenant du terminal;
- c) le retard d'un coup d'horloge pour la permutation circulaire;
- d) l'écriture des bits de signature S' après transaction ainsi obtenus.

Le séquencement de cette opération de rotation circulaire peut être fait en utilisant les fronts montants et descendants du signal d'horloge 17.

En réponse au signal d'horloge 17, et au signal lecture/écriture 21, le signal 22 commande le séquencement en positionnant le mode lecture puis le mode écriture de la mémoire 11, ce qui permet de lire les bits de signature S avant transaction puis d'écrire les bits de signature S' après transaction.

Pour que l'opération soit complète, il faut que, lorsque le registre d'adresses de la mémoire 11 contient l'adresse A256 le bit pointé dans la mémoire soit le bit d'adresse A192. Ainsi, la somme OU EXCLUSIVE du bit S63 représentant le bit de signature S stocké à l'adresse A255 et du bit U63 représentant le bit de signature chiffré U est mémorisé dans la zone mémoire S'0 d'adresse A192.

Les signaux de commande de la mémoire Il sont pilotés par la logique câblée en fonction des adresses du registre d'adresses da la mémoire.

Sur la partie d de la figure 7, les nouvelles valeurs des bits i, D' et S' sont stockées dans la carte après transaction.

Les principes décrits ci-avant relatifs à l'habilitation ou authentification d'une carte à microcircuit câblé s'appliquent à l'utilisation d'une telle carte comme un porte-monnaie électronique. La gestion de la zone mémoire utile, c'est-à-dire celle dans laquelle sont stockés les bits auxquels est affectée une unité de valeur, peut être une gestion de type compteur binaire ou de type boulier dans laquelle l'unité de valeur est égale à un jeton téléphonique par exemple. La gestion de type boulier s'oppose à la gestion de type compteur binaire dans laquelle l'unité de valeur peut être égale au franc et au centime.

Dans une mémoire à gestion du type boulier, chaque jeton est représenté par un bit, à 0 il n'est pas consommé, et à 1 il est consommé. Des poids différents peuvent être affectés aux bits selon leur adresse. Il est alors possible de rendre le décomptage irréversible, en n'autorisant que les écritures de bits de 0 à 1, ce qui correspond à des consommations. Ce n'est pas le cas d'un comptage binaire où les bits représentant le crédit de la carte passent de 0 à 1 ou de 1 à 0, suivant le contenu du compteur et le montant de la consommation.

L'invention prévoit une carte possédant une logique câblée encore plus simple que celle décrite ci-avant et qui tient compte des propriétés de la mémoire à gestion de type boulier mentionnée ci-avant.

Dans cette variante, la mémoire comprend des bits d'identification de la carte i sur par exemple 64 bits, des bits de valeur D s'étendant sur 128 bits ayant une gestion de type boulier, et des bits de signature S s'étendant sur 64 bits. Les bits de signature S sont déterminés à partir d'une seconde fonction cryptographique H ayant pour opérande seulement les bits d'identification i au lieu des 2 opérandes i et D comme précédemment. Ainsi à chaque consommation de jetons, les bits de signatures n'ont pas besoin d'être mis à jour ce qui simplifie la logique câblée en supprimant les éléments 60, 62 relatifs à la mise à jour de S après transaction décrits en référence à la figure 7.

Malgré tout, la carte doit, dans cette variante, vérifier des conditions d'accès aux zones de mémoire i, D et S. Premièrement, les bits d'identification i peuvent être lus, écrits et effacés de façon libre. Deuxièmement, les bits de valeur D peuvent être lus librement tandis que leur écriture de 0 à 1 est seulement autorisée. Par contre l'effacement de D (correspondant à l'écriture des bits de 1 à 0 pour le rechargement de la carte) ne doit pas être libre. Une solution consiste à rendre possible l'effacement de D seulement de façon simultanée à l'effacement de S, ainsi un fraudeur voulant recharger sa carte la rend inutilisable car il ne connaît pas la valeur de S à écrire. Cet effacement simultané de D et de S peut s'étendre à l'effacement simultané de i, de D et de S.

Troisièmement, les bits de signature S ne peuvent être lus tandis que leur écriture et leur effacement sont libres.

Un compteur de rechargement (non représenté) peut être placé dans les bits d'identification, par exemple un compteur de 6 bits pour 64 rechargements. Ce compteur de rechargement permet ainsi de limiter le nombre de rechargements de la carte. Ce compteur de rechargement est contrôlé par le terminal et non par la carte.

Néanmoins, la variante type boulier n'est possible que si les terminaux de rechargement des cartes sont sûrs, c'est-à-dire qu'un fraudeur doit être dans l'impossibilité de placer une sonde entre la carte et le terminal pour capter les valeurs des bits i, D et S, en vue de créer des fausses cartes.

Il est toutefois possible de limiter cette éventualité en interdisant la réécriture des bits d'identification i. Néanmoins cet empêchement complique la logique câblée de la carte puisque celle-ci doit gérer des états personnalisation ou utilisation, à moins que les bits d'identification soient dans une partie de la mémoire physiquement effaçable ce qui impliquerait l'équipement de plusieurs types de mémoires dans la carte.

Une autre solution consiste à prévoir un chiffrement de rechargement indépendant des bits de signature S. Ce chiffrement consiste à transformer les bits de valeur D par une troisième fonction cryptographique g, connue seulement des terminaux de rechargement.

L'effacement des bits de valeur D, dans ce cas n'est plus lié à l'effacement des bits de signature S. Les terminaux de rechargement de la carte n'ont à connaître que la troisième fonction cryptographique g sans connaître la seconde fonction cryptographique h.

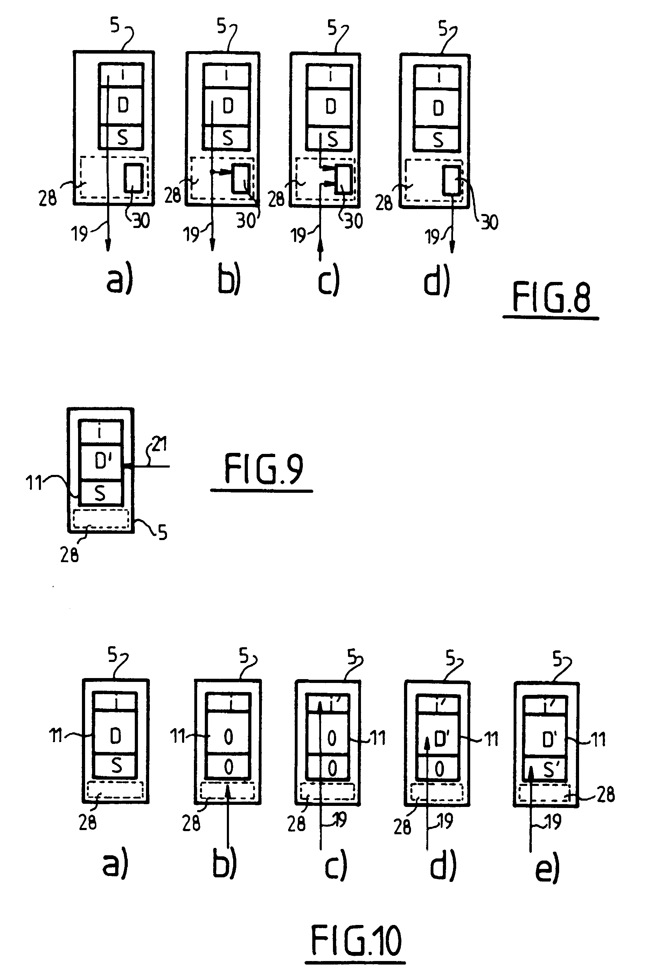

On fait maintenant référence à la figure 8 qui illustre les étapes de la variante du procédé selon l'invention avec une mémoire de type boulier.

Plus précisément sur la partie a de la figure 8, on a représenté la configuration relative à l'émission des bits d'identification i de la carte vers le terminal. Il s'agit de la lecture des cases mémoire d'adresses A0 à A63.

Sur la partie b de la figure 8, on a représenté la configuration de la carte dans le cadre de l'émission des bits de valeur D au terminal via la ligne entrée/sortie 19 ainsi que de l'introduction des bits de valeur D dans le circuit câblé 30 par l'intermédiaire de la ligne série 20. Il s'agit de la lecture des cases mémoire relatives aux bits de valeur D stockés aux adresses A64 à A191.

Sur la partie c de la figure 8, on a représenté la configuration de la carte dans le cadre de l'introduction dans le circuit câblé 30 du mot clé via la ligne entrée/sortie 19 et des bits de signature S via la ligne 20. Il s'agit de la lecture des bits de signature S et du mot clé. Cette lecture s'effectue aux adresses A192 à A255.

Sur la partie d de la figure 8, on a représenté la configuration de la carte dans le cadre du calcul du transformé par la fonction cryptographique f des bits D, S et du mot clé. Ce transformé est ensuite transmis vers le terminal via la ligne 19.

Ici, la fonction cryptographique f est établie à l'aide du mot dé, des bits de valeur D et des bits de signature S. La mise en oeuvre de cette fonction cryptographique f ne modifie pas la logique câblée précédemment décrite dans la mesure où les bits de valeur D sont introduits en série dans le circuit câblé 30 par l'entré série 20 avec les bits de signature S.

L'introduction des bits de valeur D dans la fonction cryptographique f est nécessaire pour éviter les fraudes consistant à concevoir une copie de la carte à l'aide d'un microprocesseur et d'une partie de la logique câblée de la carte. En effet, dans le cas de cette fraude le microprocesseur reçoit les signaux du terminal tandis qu'il fait appel à la partie de logique câblée pour effectuer le calcul du transformé par la fonction cryptographique f avec comme opérandes le mot clé et les bits de signature S. Cette fraude est évitée, lorsque le terminal, fait l'authentification de la carte avant et après la mise à jour des bits de valeur D en D' à l'aide du mot dé, des bits de signature S et des bits de valeur D.

On fait maintenant référence à la figure 9 qui représente la configuration de la carte lors de la consommation des bits de valeur pendant la transaction. Il s'agit d'une écriture des bits à 1, commandée par la ligne écriture/lecture 21. L'écriture des bits à 1 s'effectue aux adresses A64 à A191.

On fait maintenant référence à la figure 10 qui représente la configuration de la carte lors de l'effacement (figure 10b) et du rechargement de la carte (figure 10c à 10e).

Sur la partie b de la figure 10, les bits de la mémoire sont effacés (écriture à 0).

Sur la partie c de la figure 10, les bits d'identification i' après rechargement sont écrits dans la mémoire 11 aux adresses A0 à A63. Les bits d'identification i' après rechargement comprennent en outre l'incrémentation du compteur de rechargement

Sur la partie d de la figure 10, les bits de valeur D' sont écrits dans la mémoire aux adresses A64 à A191. Les bits de valeur D' correspondent à la valeur rechargée à laquelle est ajouté le solde antérieur.

Sur la partie e de la figure 10, les bits de signature S' sont écrits dans la mémoire aux adresses A192 à A255. Les bits de signature S' sont établis à l'aide de la fonction cryptographique H dont l'opérande est ici les bits d'identification i.

La variante relative à une carte à mémoire à gestion du type boulier, décrite en référence aux figures 8 à 10 convient aux cartes à mémoire de type EPROM.

La mise à jour des bits de valeur D et des bits de signature S peut être effectuée au furet à mesure de la consommation des bits de valeur selon les critères choisis de la transaction. Par exemple cette mise à jour appelée mise à jour "au fil de l'eau" est rendue obligatoire si l'utilisateur a la faculté de retirer la carte à tout moment. Une autre méthode consiste à mettre à jour seulement les bits de données D au fil de l'eau, c'est-à-dire que seuls quelques bits sont concernés dans le cas de jetons. En fin de communication, il y a lieu alors de mettre à jour les bits de valeur D et les bits de signature S. Ainsi un retrait prématuré rend la carte inutilisable.

Une autre variante de l'invention relative à une mémoire à gestion du type compteur binaire prévoit la mise à jour, de façon irréversible, des bits de valeur D.

Dans cette autre variante, les bits de valeur D contiennent le solde de la transaction, écrit en binaire. Le terminal effectue la lecture des bits de valeur D comme précédemment décrit.

Le terminal 1 contrôle que le crédit D de la carte est supérieur au montant à consommer m.

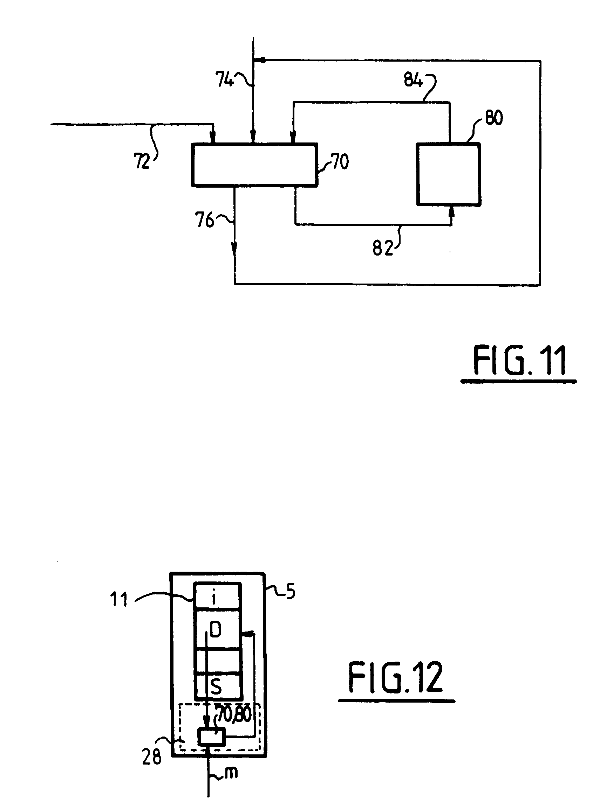

Dans la phase consommation, le terminal, au lieu d'écrire directement dans les bits de valeur D, les nouveaux bits après transaction, présente cette fois-ci à la carte le montant m à consommer (figure 11). Un additionneur à 1 bit 70 logé dans l'unité de commande 28, reçoit à sa première entrée 72, le montant m provenant du terminal. Asa seconde entrée 74, l'additionneur 70 reçoit les bits de valeur D provenant de la mémoire 11. L'additionneur 70 effectue l'opération D - m, bit à bit. La sortie 76 de l'additionneur 70 délivre le résultat de cette opération qui est stocké dans la zone mémoire affectée aux bits de valeur D.

Si le résultat de l'opération D - m est négatif, il y a lieu de prévoir un indicateur qui doit être positionné dans la mémoire de la carte et qui indique que le crédit est terminé.

Par exemple cet indicateur, non représenté, est stocké dans la mémoire Il via une bascule 80 formant boude entre la sortie 82 de l'additionneur 70 et l'entrée 84 dudit additionneur. La bascule 80 est pilotée par le signal d'horloge de la carte.

Dans le cas du rechargement d'une telle carte l'indicateur est remis à zéro. Par sécurité, l'effacement de cet indicateur est lié exdusivement à celui des bits de signature S.

Sur la figure 12, on a représenté la configuration de la carte dans le cadre de la mise à jour des bits de valeur D d'une mémoire à gestion de type compteur binaire.

Cette autre variante de l'invention convient exclusivement aux cartes à mémoire du type EEPROM.

Le contenu binaire de la mémoire secrète 40 décrit dans l'invention est commun à toutes les cartes. Bien entendu, le contenu de la mémoire peut être différent selon les cartes et leurs applications.

## Revendications

1. Carte à microcircuit câblé du type comprenant :
- une interface de communication 17);
- une mémoire interne (11);
- une unité de traitement câblée (9) permettant d'adresser de l'extérieur cette mémoire interne,
caractérisée en ce qu'il est prévu une zone mémoire interne secrète (40), non adressable de l'extérieur, et en ce que l'unité de traitement (9) comprend un circuit câblé (30) ayant une boucle à retard entre les sorties et les entrées d'adresses de la mémoire secrète, et propre à utiliser le contenu de la mémoire secrète pour établir une première fonction cryptographique (f) série de deux opérandes, et des moyens réagissant à l'interrogation d'adresses prédéterminées de la mémoire interne (11), accompagnée d'un mot dé (19), en appliquant ce mot clé (19) et la sortie (20) de la mémoire interne (11) comme opérandes du circuit câblé (30), tandis que la sortie (39) du circuit câblé est appliquée à l'interface (7).

2. Carte selon la revendication 1, caractérisée en ce que le circuit câblé (30) comprend :
- un premier opérateur logique (31) recevant le mot clé (19) et la sortie (20) de la mémoire interne (11);
- un circuit logique à retard possédant des moyens à retard (36) et formant ladite boucle entre les sorties (34) et les entrées (28) d'adresses de la mémoire secrète (40) avec intervention de moyens d'entrée (32) recevant la sortie (35) du premier opérateur ainsi que les sorties (38) des moyens à retard (36), tandis que le circuit logique à retard comprend en outre des moyens de sortie (42) recevant les sorties (38) des moyens à retard (36) et dont la sortie (39) fournit la sortie du circuit câblé (30).

3. Carte selon la revendication 2, caractérisée en ce que les moyens d'entrée comprennent un second opérateur logique (33) recevant d'une part la sortie (35) du premier opérateur, d'autre part une sortie (37) des moyens à retard, au moins ce second opérateur (33) étant du type binaire équiprobable, tel qu'un OU EXCLUSIF.

4. Carte selon la revendication 2 et la revendication 3, caractérisée en ce que les moyens à retard comprennent une pluralité de bascules (R0 à R3) montées en boude entre les sorties et les entrées d'adresses de la mémoire secrète (40), l'une au moins des bascules (R0) recevant la sortie (41) du second opérateur logique (33), lui-même recevant d'une part la sortie (35) du premier opérateur, d'autre part une sortie (37) de la mémoire secrète, tandis qu'une des bascules (R3) fournit la sortie (39) du circuit câblé.

5. Carte selon l'une des revendications 2 à 4, caractérisée en ce que les deux opérateurs logiques (31, 33) sont du type OU EXCLUSIF.

6. Carte selon la revendication 1, caractérisée en ce que le mot clé est une donnée variable provenant de l'interface (7).

7. Carte selon la revendication 1, caractérisée en ce que la mémoire interne comprend :
- des bits d'identification (i) de la carte;
- des bits de valeur (D) auxquels est affectée une unité de valeur consommable par écriture ; et
- des bits de signature (S) de la carte.

8. Carte selon la revendication 7, caractérisée en ce que les bits de signature (S), introduits dans la mémoire interne (11), sont le résultat d'un chiffrement par une seconde fonction cryptographique (H), secrète, extérieure à la carte, et ayant la sortie de la mémoire interne comme opérande.

9. Carte selon la revendication 7, caractérisée en ce que les bits de signature (S), introduits dans la mémoire interne (11), sont le résultat d'un chiffrement par une seconde fonction cryptographique (H), secrète et extérieure à la carte, ayant les bits d'identification (i) et les bits de valeur (D) comme opérandes.

10. Carte selon la revendication 1, caractérisée en ce que la mémoire (11) est à écriture permanente, non effaçable électriquement, de type EPROM.

11. Carte selon la revendication 1, caractérisée en ce que la mémoire est à écriture permanente, effaçable et renouvelable électriquement, du type EEPROM.

12. Carte selon la revendication 1, caractérisée en ce que la mémoire secrète (40) est à écriture permanente.

13. Carte selon la revendication 1, caractérisée en ce que la mémoire secrète (40) est à écriture permanente, du type PROM, possédant un contenu binaire fixe.

14. Procédé de transaction entre au moins un terminal et au moins une carte à microcircuit câblé propre à coopérer avec ce terminal, dans lequel il est prévu d'équiper la carte d'une interface de communication (7), d'une mémoire interne (11), et d'une unité de traitement câblée (9) permettant d'adresser de l'extérieur cette mémoire interne, et dans lequel il est prévu en outre de mémoriser préalablement dans la carte (5) des bits d'identification (i) de la carte et des bits de valeur (D) auxquels est affectée une unité de valeur, consommable par écriture, caractérise par les étapes suivantes :
- a) prévoir dans la carte (5) une zone mémoire interne secrète (40), non adressable de l'extérieur ;
- b) mémoriser préalablement dans la carte (5) :
. des bits de signature (S) de la carte ;
- c) équiper l'unité de traitement de la carte (9) d'un circuit câblé (30) ayant une boucle à retard entre les sorties et les entrées d'adresses de la mémoire secrète, et propre à utiliser le contenu de la mémoire secrète pour établir une première fonction cryptographique (f) série de deux opérandes;
- d) lors d'une demande d'habilitation pour une transaction qui est supposée provenir de la carte :
. d1) recevoir au terminal la sortie de la mémoire interne;
. d2) équiper le terminal de moyens propres à générer un mot clé;
. d3) émettre du terminal le mot clé;
. d4) calculer au niveau de la carte, le transformé du mot clé et de la sortie de la mémoire interne, par la première fonction cryptographique;
. d5) recevoir de la carte, ledit transformé par la première fonction cryptographique;
. d6) calculer au terminal, le transformé du mot clé et de la sortie de la mémoire interne par la première fonction cryptographique;
. d7) décider de l'habilitation en fonction de la comparaison entre le transformé reçu de la carte et le transformé calculé par le terminal.

15. Procédé selon la revendication 14, caractérisé en ce qu'au niveau de la carte, les bits de signature (S) servent avec le mot clé (19) d'opérandes à la première fonction cryptographique (f).

16. Procédé selon la revendication 14 et la revendication 15, caractérisé en ce que les bits de signature (S), introduits dans la carte, sont le transformé d'une seconde fonction cryptographique (H) secrète, extérieure à la carte, et ayant la sortie de la mémoire interne (i,D) comme opérande.

17. Procédé selon l'une des revendications 14 à 16, caractérisé en ce qu'il comprend en outre l'équipement du terminal de moyens propres à effectuer une seconde fonction cryptographique (H) ayant la sortie de la mémoire interne (i,D) comme opérande tandis que lors d'une demande d'habilitation pour une transaction, l'étape dl) comprend en outre l'étape consistant à calculer au terminal les bits de signature (S) avec le transformé de la sortie de la mémoire interne (i,D) par la seconde fonction cryptographique (H) et que l'étape d6) consiste à calculer au terminal le transformé de la première fonction cryptographique (f) ayant pour opérandes le mot clé (19) et le transformé de la seconde fonction cryptographique (H), c'est-à-dire les bits de signature (S) ainsi calculés par le terminal.

18. Procédé selon l'une des revendications 14 à 17, dans lequel la carte à microcircuit câblé détient au moins des bits de valeur possédant une valeur fixée à l'avance, destinés à être traités par le terminal pour valider la transaction selon des critères choisis, caractérisé en ce que ledit procédé comprend après la condusion de la transaction :
- a) obtenir au terminal les bits de valeur (D'), après transaction.
- b) comparer au terminal les bits de valeur (D') après transaction avec les bits de valeur (D) avant transaction;
- d) calculer au terminal, si les bits de valeur après transaction (D') sont supérieurs aux bits de valeur avant trans action (D), le transformé (S') des bits d'identification (i) et des bits de valeur (D') après transaction par la seconde fonction cryptographique (H);
- d) décaler selon une permutation circulaire d'un élément binaire, le transformé (S') par la seconde fonction cryptographique ainsi calculé;
- e) obtenir un signal intermédiaire chiffré (U) par la somme OU EXCLUSIVE du transformé par la seconde fonction cryptogr aphique (H) calculé avant transaction (S) et du transformé (S') par la seconde fonction cryptographique (H) calculé après transaction et lui-même décalé selon la permutation circulaire;
- f) émettre les bits de valeur après transaction (D') ;
- g) émettre du terminal ledit signal intermédiaire chiffré (U) ;
- h) écrire dans la mémoire les bits de valeur après transaction (D') ;
- i) mémoriser dans la carte la somme OU EXCLUSIVE des bits de signature avant transaction (S) et du signal intermédiaire chiffré (U) ;
- j) écrire dans la mémoire les bits de signature (S') après transaction à l'aide de ladite somme OU EXCLUSIVE ainsi mémorisée.

19. Procédé selon l'une des revendications 14 à 18, pour la mise à jour des bits de valeur après transaction, caractérisé en ce qu'il comprend :
- a) émettre du terminal les bits représentatifs du montant (m) de la transaction;
- b) comparer les bits représentatifs du montant (m) avec les bits de valeur (D);
- c) soustraire les bits représentatifs du montant (m) des bits de valeur (D) ;
- d) positionner un indicateur selon le signe de la soustraction.

20. Procédé selon l'une des revendications 14 à 19, dans lequel à chaque bit de valeur est associée une unité de valeur, variable selon le poids du bit, caractérisé en ce que les bits de valeur (S) sont consommés par écriture irréversible de 0 à 1.

21. Procédé selon la revendication 14 et la revendication 20, caractérisé en ce que l'étape d4) consiste à calculer au niveau de la carte le transformé par la première fonction cryptographique (f) du mot dé (19) comme première opérande et des bits de valeur (D) et des bits de signature (S) comme seconde opérande en série.

22. Procédé selon l'une des revendications 14 à 20, en cas d'épuisement des bits de valeur, caractérisé en ce qu'il comprend les étapes suivantes :
a) mettre à zéro les bits d'identification (i) de valeur (D) et de signature (S) avant rechargement;
b) incrémenter un compteur de rechargement; et
c) recharger dans la carte les nouveaux bits d'identification (i'), les bits de valeur (D') et les bits de signature (S').

23. Procédé selon la revendication 14, caractérisé en ce que les bits de valeur sont chiffrés par une troisième fonction cryptographique (g), spécifique à la carte.

24. Procédé selon la revendication 23, en cas d'épuisement des bits de valeur (D), caractérisé en ce qu'il comprend les étapes suivantes :
a) mettre à zéro les bits d'identification (i), et les bits de valeur, avant rechargement;
b) incrémenter un compteur de rechargement; et
c) recharger les bits d'identification (i) et les bits de valeur (D'), après rechargement.

25. Carte à microcircuit câblé selon l'une des revendications 1 à 13 pour la mise en oeuvre du procédé selon la revendication 18, caractérisée en ce qu'elle comprend en outre :
- un opérateur OU EXCLUSIF (60) possédant une première entrée recevant les bits de signature (S) avant transaction, et une seconde entrée recevant le signal intermédiaire chiffré (U), et
- un registre de mémorisation (62) possédant une entrée reliée à la sortie de l'opérateur OU EXCLUSIF (60) et une sortie reliée à la sortie de la mémoire interne.

26. Carte à microcircuit câblé selon l'une des revendications 1 à 13 pour la mise en oeuvre du procédé selon la revendication 19, caractérisée en ce qu'elle comprend en outre :
- un opérateur additionneur (70) possédant une première entrée (72) recevant les bits représentatifs du montant (m) de la transaction provenant du terminal, une seconde entrée (74) reliée à la sortie de la mémoire interne et une première sortie (76) reliée à la sortie de la mémoire interne; et
- une bascule de retenue (80) formant boucle entre les entrées et sorties de l'opérateur additionneur.

27. Carte à microcircuit câblé selon l'une des revendications 1 à 13, pour la mise en oeuvre du procédé selon les revendications 21 et 23, caractérisé en ce que les bits de valeur (D) sont chiffrés par une troisième fonction cryptographique (g), spécifique à la carte.

28. Carte à microcircuit câblé selon l'une des revendications 1 à 13, pour la mise en oeuvre du procédé selon la revendication 22 ou la revendication 24, caractérisé en ce que la mémoire interne possède en outre un compteur de rechargement.

## Patentansprüche

1. Karte mit Mikroschaltung, die folgendes aufweist:
- eine Kommunikationsschnittstelle (7);
- einen internen Speicher (11);
- eine festverdrahtete Verarbeitungseinheit (9), die eine Adressierung des internen Speichers von außen gestattet,
**dadurch gekennzeichnet, daß**
ein versteckter, von außen nicht adressierbarer interner Speicherbereich (40) vorgesehen ist, und daß die Verarbeitungseinheit (9) eine festverdrahtete Schaltung (30) mit einem Laufzeitband zwischen den Ausgängen und den Eingängen der versteckten Adressspeicher, mit welcher unter Heranziehung des Inhalts des versteckten Speicherbereichs eine erste serielle Verschlüsselungsfunktion (f) mit zwei Operanden erstellbar ist, sowie Einrichtungen aufweist, die auf die Abfrage vorgegebener Adressen im internen Speicher (11) mit begleitendem Paßwort (19) ansprechen, wobei dieses Paßwort (19) und die Ausgangsinformation (20) des internen Speichers (11) als Operanden für die festverdrahtete Schaltung (30) eingesetzt werden, während die Ausgangsinformation (39) von der festverdrahteten Schaltung an die Schnittstelle (7) geführt wird.

2. Karte nach Anspruch 1, dadurch gekennzeichnet, daß die festverdrahtete Schaltung (30) folgendes aufweist:
- eine erste boolesche Verknüpfungslogik (31), welche das Paßwort (19) und das Ausgangssignal (20) vom internen Speicher (11) empfängt;
- ein Logikschaltelement mit Laufzeitkette, das eine Laufzeitketteneinrichtung (36) aufweist und unter Zwischenschaltung einer Eingangseinrichtung (32) zur Übernahme des Ausgangssignals (35) der ersten booleschen Verknüpfungslogik sowie der Ausgangssignale (38) der Laufzeitketteneinrichtung (36) zwischen den Adressenausgängen (34) und den Adresseneingängen (28) des versteckten Speichers (40) eine Schleife bildet, während das Logikschaltelement mit Laufzeitkette weiterhin eine Ausgangseinrichtung (42) zur Übernahme der Ausgangssignale (38) der Laufzeitketteneinrichtung (36) aufweist, deren Ausgangssignal (39) das Ausgangssignal der festverdrahteten Schaltung (30) liefert.

3. Karte nach Anspruch 2, dadurch gekennzeichnet, daß die Eingangseinrichtung eine zweite boolesche Verknüpfungslogik (33) aufweist, die einerseits das Ausgangssignal (35) des ersten Logikschaltelements und andererseits ein Ausgangssignal (37) der Laufzeitketteneinrichtung (35) übernimmt, wobei zumindest die zweite boolesche Verknüpfungslogik (33) als Binärlogik mit Äquivalenz-Wahrscheinlichkeitsfunktion, beispielsweise als exklusive ODER-Schaltung, ausgeführt ist.

4. Karte nach Anspruch 2 und Anspruch 3, dadurch gekennzeichnet, daß die Laufzeitketteneinrichtung eine Vielzahl von Flipflopschaltungen (R0 bis R3) aufweist, die zwischen den Adressenausgängen und den Adresseneingängen des versteckten Speichers (40) in einer Schleife geschaltet sind, wobei zumindest eine der Flipflopschaltungen (R0) das Ausgangssignal (41) der zweiten booleschen Verknüpfungslogik (33) übernimmt, die ihrerseits zum einen das Ausgangssignal (35) der ersten booleschen Verknüpfungslogik und zum anderen ein Ausgangssignal (37) des versteckten Speichers übernimmt, während eine der Flipflopschaltungen (R3) das Ausgangssignal (39) der festverdrahteten Schaltung liefert.

5. Karte nach einem der Ansprüche 2 bis 4, dadurch gekennzeichnet, daß die beiden booleschen Verknüpfungslogik-Elemente (31, 33) als exklusive ODER-Schaltung ausgeführt sind.

6. Karte nach Anspruch 1, dadurch gekennzeichnet, daß das Paßwort eine veränderliche vorgegebene Gröpe ist, die von der Schnittstelle (7) kommt.

7. Karte nach Anspruch 1, dadurch gekennzeichnet, daß der interne Speicher folgendes aufweist:
- Kennungsbits (i) zur Identifizierung der Karte;
- Wertbits (D), denen eine im Aufzeichnungsbetrieb verwertbare Werteinheit zugeordnet ist; und
- Signaturbits (S) als Signatur für die Karte.

8. Karte nach Anspruch 7, dadurch gekennzeichnet, daß die Signaturbits (S), die in den internen Speicher (11) eingegeben sind, das Resultat einer Chiffrierung mit einer zweiten versteckten Verschlüsselungsfunktion (H) außerhalb der Karte sind, bei der das Ausgangssignal des internen Speichers der Operand ist.

9. Karte nach Anspruch 7, dadurch gekennzeichnet, daß die Signaturbits (S), die in den internen Speicher (11) eingegeben sind, das Resultat einer Chiffrierung mit einer zweiten versteckten Verschlüsselungsfunktion (H) außerhalb der Karte sind, bei der die Kennungsbits (i) und die Wertbits (D) die Operanden sind.

10. Karte nach Anspruch 1, dadurch gekennzeichnet, daß der Speicher (11) ein auf elektrischem Wege nicht löschbarer Festwertspeicher vom EPROM-Typ ist.

11. Karte nach Anspruch 1, dadurch gekennzeichnet, daß der Speicher (11) ein auf elektrischem Wege löschbarer und erneuerbarer Festwertspeicher vom EEPROM-Typ ist.

12. Karte nach Anspruch 1, dadurch gekennzeichnet, daß der versteckte Speicher (40) ein Festwertspeicher ist.

13. Karte nach Anspruch 1, dadurch gekennzeichnet, daß der versteckte Speicher (40) ein Festwertspeicher vom PROM-Typ ist und einen unveränderlichen binären Speicherinhalt hat.

14. Verfahren zur Übertragung zwischen mindestens einem Datenendgerät und mindestens einer zum Zusammenwirken mit diesem Datenendgerät geeigneten Karte mit festverdrahteter Mikroschaltung, bei welchem vorgesehen ist, die Karte mit einer Kommunikationsschnittstelle (7), einem internen Speicher (11) und einer festverdrahteten Verarbeitungseinheit (9) auszustatten, welche die Adressierung des internen Speichers von außen gestattet, und bei welchem darüberhinaus vorgesehen ist, vorläufig in der Karte (5) Kennungsbits (i) zur Identifizierung der Karte und Wertbits (D), denen eine im Aufzeichnungsbetrieb verwertbare Werteinheit zugeordnet ist, abzuspeichern, gekennzeichnet durch die folgenden Schritte:
- a) Anordnen eines von außerhalb nicht adressierbaren versteckten internen Speicherbereichs (40) in der Karte (5);
- b) vorläufiges Abspeichern in der Karte (5) von:
• Signaturbits (i) als Signatur für die Karte;
- c) Ausstatten der Verarbeitungseinheit mit einer festverdrahteten Schaltung (30) mit einem Laufzeitband zwischen den Ausgängen und den Eingängen der versteckten Adressspeicher, mit welcher unter Heranziehung des Inhalts des versteckten Speichers eine erste serielle Verschlüsselungsfunktion (f) mit zwei Operanden erstellbar ist,
- d) während einer laufenden Anforderung der Zugriffsberechtigung für eine als von der Karte kommend vermutete Transaktion:
• d1)Empfangen des Ausgangssignals vom internen Speicher im Datenendgerät;
• d2)Ausstatten des Datenendgeräts mit geeigneten Einrichtungen zum Erzeugen eines Paßworts;
• d3)Übermitteln des Paßworts vom Datenendgerät;
• d4)Berechnen der Transformierten des Paßworts und des Ausgangssignals des internen Speichers auf der Kartenebene unter Heranziehung der ersten Verschlüsselungsfunktion;
• d5)Übernehmen der mit der ersten Verschlüsselungsfunktion erstellten Transformierten von der Karte;
• d6)Berechnen der Transformierten des Paßworts und des Ausgangssignals des internen Speichers auf der Ebene des Datenendgeräts unter Heranziehung der ersten Verschlüsselungsfunktion;
• d7)Entscheiden über die Zugriffsberechtigung in Abhängigkeit vom Vergleich der von der Karte übernommenen Transformierten mit der vom Datenendgerät berechneten Transformierten.

15. Verfahren nach Anspruch 14, dadurch gekennzeichnet, daß auf der Kartenebene die Signaturbits (S) mit dem Paßwort (19) als Operanden bei der ersten Verschlüsselungsfunktion (f) dienen.

16. Verfahren nach Anspruch 14 und Anspruch 15, dadurch gekennzeichnet, daß die Signaturbits (S), die in die Karte eingegeben sind, die Transformierte einer zweiten außerhalb der Karte vorgesehenen versteckten Verschlüsselungsfunktion (H) darstellen, bei welcher das Ausgangssignal des internen Speichers (i, D) als Operand herangezogen wird.

17. Verfahren nach einem der Ansprüche 14 bis 16, dadurch gekennzeichnet, daß dabei das Datenendgerät des weiteren mit einer zur Ausführung einer zweiten Verschlüsselungsfunktion (H) unter Heranziehung des Ausgangssignals des internen Speichers (i, D) als Operand geeigneten Einrichtung ausgestattet wird, während bei einer laufenden Anforderung der Zugriffsberechtigung für eine Transaktion der Schritt dl) den zusätzlichen Schritt umfaßt, daß im Datenendgerät die Signaturbits (S) mit der Transformierten des Ausgangssignals des internen Speichers (i, D) unter Heranziehung der zweiten Verschlüsselungsfunktion (H) berechnet werden, und daß der Schritt d6) darin besteht, daß im Datenendgerät die Transformierte der ersten Verschlüsselungsfunktion (f) berechnet wird, wobei als Operanden das Paßwort (19) und die Transformierte der zweiten Verschlüsselungsfunktion (H) eingesetzt werden, d.h. die vom Datenendgerät auf diese Weise berechneten Signaturbits (S).

18. Verfahren nach einem der Ansprüche 14 bis 17, bei welchem die Karte mit festverdrahteter Mikroschaltung zumindest Wertbits beinhaltet, deren Wert im voraus festgelegt ist und die zur Verarbeitung im Datenendgerät zur Gültigmachung der Transaktion entsprechend gewählten Kriterien vorgesehen sind, dadurch gekennzeichnet, daß das Verfahren folgende Schritte nach Abschluß der Transaktion umfaßt:
- a) Erhalten der Wertbits (D') nach der Transaktion im Datenendgerät;
- b) Vergleichen der Wertbits (D') nach der Transaktion mit den Wertbits (D) vor der Transaktion im Datenendgerät;
- c) Berechnen im Datenendgerät, ob die Wertbits nach der Transaktion (D') größer als die wertbits vor der Transaktion (D) sind, sowie der Transformierten (S') der Kennungsbits (i) und der Wertbits (D') nach der Transaktion unter Heranziehung der zweiten Verschlüsselungsfunktion (H);
- d) Verschieben der auf diese Weise berechneten Transformierten (S') aus der zweiten Verschlüsselungsfunktion um eine Bitstelle in einer zyklischen Permutation;
- e) Erhalten eines mit dem Ergebnis einer exklusiven ODER-Verknüpfung der vor der Transaktion (S) berechneten Transformierten aus der zweiten Verschlüsselungsfunktion (H) mit der nach der Transaktion berechneten und selbst zyklisch permutierten Transformierten (S') aus der zweiten Verschlüsselungsfunktion (H) chiffrierten Zwischensignals (U);
- f) Übermitteln der Wertbits nach der Transaktion (D');
- g) Übermitteln des chiffrierten Zwischensignals (U) vom Datenendgerät aus;
- h) Einschreiben der Wertbits nach der Transaktion (D') in den Speicher;
- i) Abspeichern des Ergebnisses der exklusiven ODER-Verknüpfung der Signaturbits vor der Transaktion (S) mit dem chiffrierten Zwischensignal (U) in der Karte;
- j) Eintragen der Signaturbits nach der Transaktion (S') mit Hilfe des auf diese Weise gespeicherten Ergebnisses der exklusiven ODER-Verknüpfung.

19. Verfahren nach einem der Ansprüche 14 bis 18 zur Aktualisierung der Wertbits nach der Transaktion, dadurch gekennzeichnet, daß es die folgenden Schritte umfaßt:
- a) Übermitteln der für den Betrag (m) der Transaktion repräsentativen Bits vom Datenendgerät aus;
- b) Vergleichen der für den Betrag repräsentativen Bits (m) mit den Wertbits (D);
- c) Subtrahieren der für den Betrag (m) repräsentativen Bits von den Wertbits (D);
- d) Setzen einer Markierung in Abhängigkeit vom Vorzeichen des Ergebnisses der Subtraktion.

20. Verfahren nach einem der Ansprüche 14 bis 19, bei welchem jedem Wertbit eine je nach dem Stellenwert des Bits veränderliche Werteinheit zugeordnet wird, dadurch gekennzeichnet, daß die Wertbits (S) durch nicht umkehrbares Umschreiben von 0 auf 1 verwertet werden.

21. Verfahren nach Anspruch 14 und Anspruch 20, dadurch gekennzeichnet, daß der Schritt d4) darin besteht, daß auf der Kartenebene die Transformierte mit der ersten Verschlüsselungsfunktion (f) unter Einbeziehung des Paßworts (19) als erstem Operanden und der Wertbits (D) sowie der Signaturbits (S) als zweitem seriellen Operanden berechnet wird.

22. Verfahren nach einem der Ansprüche 14 bis 20 für den Fall der Ausschöpfung der Wertbits, dadurch gekennzeichnet, daß es die folgenden Schritte umfaßt:
a) Rücksetzen der Kennungsbits (i) mit dem Wert (D) und der Signaturbits (S) vor dem Nachladen auf Null;
b) Hochzählen eines Nachladezählers; und
c) Nachladen der Karte mit den neuen Kennungsbits (i'), Wertbits (D') und Signaturbits (S').

23. Verfahren nach Anspruch 14, dadurch gekennzeichnet, daß die Wertbits mit einer für die Karte spezifischen dritten verschlüsselungsfunktion (g) chiffriert werden.

24. Verfahren nach Anspruch 23 für den Fall der Ausschöpfung der Wertbits (D), dadurch gekennzeichnet, daß es die folgenden Schritte umfaßt:
a) Rücksetzen der Kennungsbits (i) und der wertbits vor dem Nachladen auf Null;
b) Hochzählen eines Nachladezählers; und
c) Nachladen der Karte mit den Kennungsbits (i') und den Wertbits (D') nach dem Nachladen.

25. Karte mit festverdrahteter Mikroschaltung nach einem der Ansprüche 1 bis 13, zur Durchführung des Verfahrens nach Anspruch 18, dadurch gekennzeichnet, daß sie außerdem folgendes Elemente aufweist:
- eine erste exklusive ODER-Schaltung (60), die einen ersten Eingang zur Übernahme der Signaturbits (S) vor der Transaktion und einen zweiten Eingang zur Übernahme des chiffrierten Zwischensignals (U) aufweist, sowie
- ein Speicherregister (62) mit einem mit dem Ausgang der ersten exklusiven ODER-Schaltung (60) verbundenen Eingang und einem mit dem Ausgang des internen Speichers verbundenen Ausgang.

26. Karte mit festverdrahteter Mikroschaltung nach einem der Ansprüche 1 bis 13, zur Durchführung des Verfahrens nach Anspruch 19, dadurch gekennzeichnet, daß sie außerdem folgendes aufweist:
- eine Additionsschaltung (70) mit einem ersten Eingang (72) zur Übernahme der vom Datenendgerät kommenden und für den Betrag (m) der Transaktion repräsentativen Bits, mit einem zweiten Eingang (74), der mit dem Ausgang des internen Speichers verbunden ist, und mit einem ersten Ausgang (76), der mit dem Ausgang des internen Speichers verbunden ist; sowie ein Speicherflipflop (80), das unter Bildung einer Schleife zwischen die Eingänge und Ausgänge der Additionsschaltung geschaltet ist.

27. Karte mit festverdrahteter Mikroschaltung nach einem der Ansprüche 1 bis 13, zur Durchführung des Verfahrens nach den Ansprüchen 21 und 23, dadurch gekennzeichnet, daß die Wertbits (D) mittels einer für die Karte spezifischen dritten Verschlüsselungsfunktion (g) chiffriert sind.

28. Karte mit festverdrahteter Mikroschaltung nach einem der Ansprüche 1 bis 13 zur Durchführung des Verfahrens nach Anspruch 22 oder nach Anspruch 24, dadurch gekennzeichnet, daß der interne Speicher zusätzlich einen Nachladezähler aufweist.

## Claims

1. Hard-wired microcircuit card of the type comprising:
- a communication interface (7);
- an internal memory (11);
- a hard-wired processing unit (9) permitting this internal memory to be addressed from outside,
characterized in that there is provided a secret internal memory zone (40), which cannot be addressed from outside, and in that the processing unit (9) comprises a hard-wired circuit (30) having a delay looping between the outputs and the inputs of addresses of the secret memory, and able to use the contents of the secret memory in order to set up a first serial cryptographic function (f) with two operands, and means reacting to the interrogation of predetermined addresses of the internal memory (11), which is accompanied by a keyword (19), by applying this keyword (19) and the output (20) of the internal memory (11) as operands of the hard-wired circuit (30), whilst the output (39) of the hard-wired circuit is applied to the interface (7).

2. Card according to Claim 1, characterized in that the hard-wired circuit (30) comprises:
- a first logical operator (31) receiving the keyword (19) and the output (20) of the internal memory (11);
- a logic delay circuit possessing delay means (36) and forming the said looping between the outputs (34) and the inputs (28) of addresses of the secret memory (40) with intervening input means (32) receiving the output (35) of the first operator and the outputs (38) of the delay means (36), whilst the logic delay circuit furthermore comprises output means (42) receiving the outputs (38) of the delay means (36) and whose output (39) furnishes the output of the hard-wired circuit (30).

3. Card according to Claim 2, characterized in that the input means comprise a second logical operator (33) receiving on the one hand the output (35) of the first operator, and on the other hand an output (37) of the delay means, at least this second operator (33) being of the equiprobable binary type, such as an EXCLUSIVE OR.

4. Card according to Claim 2 and Claim 3, characterized in that the delay means comprise a plurality of flip-flops (R0 to R3) configured in a loop between the outputs and the inputs of addresses of the secret memory (40), one at least of the flip-flops (R0) receiving the output (41) of the second logical operator (33), itself receiving on the one hand the output (35) of the first operator, and on the other hand an output (37) of the secret memory, whilst one of the flip-flops (R3) furnishes the output (39) of the hard-wired circuit.

5. Card according to one of Claims 2 to 4, characterized in that the two logical operators (31, 33) are of the EXCLUSIVE OR type.

6. Card according to Claim 1, characterized in that the keyword is a variable datum coming from the interface (7).

7. Card according to Claim 1, characterized in that the internal memory comprises:
- identifying bits (i) for the card;
- value bits (D) to which is assigned a value unit depletable through writing; and
- signing bits (S) for the card.

8. Card according to Claim 7, characterized in that the signing bits (S), introduced into the internal memory (11), are the result of an enciphering by a second secret cryptographic function (H), outside the card, and having the output of the internal memory as operand.

9. Card according to Claim 7, characterized in that the signing bits (S), introduced into the internal memory (11), are the result of an enciphering by a second secret cryptographic function (H), and outside the card, having the identifying bits (i) and the value bits (D) as operands.

10. Card according to Claim 1, characterized in that the memory (11) is permanently writable, electrically non-erasable and of EPROM type.

11. Card according to Claim 1, characterized in that the memory is permanently writable, electrically renewable and erasable, and of the EEPROM type.

12. Card according to Claim 1, characterized in that the secret memory (40) is permanently writable.

13. Card according to Claim 1, characterized in that the secret memory (40) is permanently writable, of the PROM type, and possessing a fixed binary content.

14. Method of transaction between at least one terminal and at least one hard-wired microcircuit card able to cooperate with this terminal, in which it is provided for the card to be equipped with a communication interface (7), with an internal memory (11) and with a hard-wired processing unit (9) permitting this internal memory to be addressed from outside, and in which it is provided, furthermore, for there to be previously stored in the card (5) identifying bits (i) for the card and value bits (D) to which is assigned a value unit, depletable through writing, characterized by the following steps:
- a) providing in the card (5) a secret internal memory zone (40), which cannot be addressed from outside;
- b) previously storing in the card (5):
. signing bits (S) for the card;
- c) equipping the processing unit of the card (9) with a hard-wired circuit (30) having a delay looping between the outputs and the inputs of addresses of the secret memory, and able to use the contents of the secret memory in order to set up a first serial cryptographic function (f) with two operands;
- d) during an accreditation request for a transaction which is assumed to come from the card:
. d1) receiving at the terminal the output of the internal memory;
. d2) equipping the terminal with means able to generate a keyword;
. d3) transmitting from the terminal the keyword;
. d4) calculating at card level, the transform by the first cryptographic function, of the keyword and of the output of the internal memory;
. d5) receiving from the card, the said transform by the first cryptographic function;
. d6) calculating at the terminal, the transform by the first cryptographic function, of the keyword and of the output of the internal memory;
. d7) deciding on the accreditation as a function of the comparison between the transform received from the card and the transform calculated by the terminal.

15. Method according to Claim 14, characterized in that at card level, the signing bits (S) serve with the keyword (19) as operands to the first crytographic function (f).

16. Method according to Claim 14 and Claim 15, characterized in that the signing bits (S), introduced into the card, are the transform of a second secret cryptographic function (H), outside the card, and having the output of the internal memory (i, D) as operand.

17. Method according to one of Claims 14 to 16, characterized in that it furthermore comprises the equipping of the terminal with means able to effect a second cryptographic function (H) having the output of the internal memory (i, D) as operand whilst during an accreditation request for a transaction, step dl) furthermore comprises the step consisting in calculating at the terminal the signing bits (S) with the transform by the second cryptographic function (H), of the output of the internal memory (i, D), and in that step d6) consists in calculating at the terminal the transform of the first cryptographic function (f) having for operands the keyword (19) and the transform of the second cryptographic function (H), that is to say the signing bits (S) thus calculated by the terminal.

18. Method according to one of Claims 14 to 17, in which the hard-wired microcircuit card holds at least value bits possessing a value fixed in advance, which are intended to be processed by the terminal in order to validate the transaction according to chosen criteria, characterized in that the said method comprises after the conclusion of the transaction:
- a) obtaining at the terminal the value bits (D'), after transaction;
- b) comparing at the terminal the value bits (D') after transaction with the value bits (D) before transaction;
- d) calculating at the terminal, if the value bits after transaction (D') are greater than the value bits before transaction (D), the transform (S') by the second cryptographic function (H), of the identifying bits (i) and of the value bits (D') after transaction;
- d) shifting according to a cyclic permutation of a binary element, the thus calculated transform (S') by the second cryptographic function;
- e) obtaining an enciphered intermediate signal (U) through the EXCLUSIVE OR sum of the transform, calculated before transaction (S), by the second cryptographic function (H), and the transform (S'), calculated after transaction, by the second cryptographic function (H), which transform is itself shifted according to the cyclic permutation;
- f) transmitting the value bits after transaction
- g) transmitting from the terminal the said enciphered intermediate signal (U);
- h) writing into the memory the value bits after transaction (D');
- i) storing in the card the EXCLUSIVE OR sum of the signing bits before transaction (S) and the enciphered intermediate signal (U);
- j) writing into the memory the signing bits (S') after transaction with the aid of the said EXCLUSIVE OR sum thus stored.

19. Method according to one of Claims 14 to 18, for updating the value bits after transaction, characterized in that it comprises:
- a) transmitting from the terminal the bits representative of the balance (m) of the transaction;
- b) comparing the bits representative of the balance (m) with the value bits (D);
- c) subtracting the bits representative of the balance (m) from the value bits (D);
- d) positioning an indicator according to the sign of the subtraction.

20. Method according to one of Claims 14 to 19, in which a value unit, which can vary according to the bit significance, is assigned to each value bit, characterized in that the value bits (S) are depleted through irreversible writing from 0 to 1.

21. Method according to Claim 14 and Claim 20, characterized in that step d4) consists in calculating at card level the transform by the first cryptographic function (f) of the keyword (19) as first operand and of the value bits (D) and of the signing bits (S) as second operand in series.

22. Method according to one of Claims 14 to 20, in the event of exhaustion of the value bits, characterized in that it comprises the following steps:
a) resetting the identifying (i), value (D) and signing (S) bits before reload;
b) incrementing a reload counter; and
c) reloading into the card the new identifying bits (i'), value bits (D') and signing bits (S').

23. Method according to Claim 14, characterized in that the value bits are enciphered by a third cryptographic function (g), specific to the card.

24. Method according to Claim 23, in the event of exhaustion of the value bits (D), characterized in that it comprises the following steps:
a) resetting the identifying bits (i), and the value bits, before reload;
b) incrementing a reload counter; and
c) reloading the identifying bits (i) and the value bits (D'), after reload.

25. Hard-wired microcircuit card according to one of Claims 1 to 13 for implementing the method according to Claim 18, characterized in that it furthermore comprises:
- an EXCLUSIVE OR operator (60) possessing a first input receiving the signing bits (S) before transaction, and a second input receiving the enciphered intermediate signal (U), and
- a storage register (62) possessing an input connected to the output of the EXCLUSIVE OR operator (60) and an output connected to the output of the internal memory.

26. Hard-wired microcircuit card according to one of Claims 1 to 13 for implementing the method according to Claim 19, characterized in that it furthermore comprises:
- an adder operator (70) possessing a first input (72) receiving the bits representative of the balance (m) of the transaction coming from the terminal, a second input (74) connected to the output of the internal memory and a first output (76) connected to the output of the internal memory; and
- a carry flip-flop (80) looping between the inputs and outputs of the adder operator.

27. Hard-wired microcircuit card according to one of Claims 1 to 13 for implementing the method according to Claims 21 and 23, characterized in that the value bits (D) are enciphered by a third cryptographic function (g), specific to the card.

28. Hard-wired microcircuit card according to one of Claims 1 to 13 for implementing the method according to Claim 22 or Claim 24, characterized in that the internal memory furthermore possesses a reload counter.
